# EUROPÄISCHE PATENTSCHRIFT

(11) **EP 0 537 803 B1**
(45) Veröffentlichungstag und Bekanntmachung des Hinweises auf die Patenterteilung: **05.01.2000**
(21) Anmeldenummer: 92122132.1
(22) Anmeldetag: 02.10.1987
(51) Int. Cl.: H04N 5/232

(54) **Fernsehkamera mit einem Target**
Image vibration suppressing device
Dispositif pour supprimer les vibrations d'images

(30) Priorität: 09.10.1986 DE 3634414
(43) Veröffentlichungstag der Anmeldung: 21.04.1993
(62) Teilanmeldung aus: 87114377.2
(73) Patentinhaber: DEUTSCHE THOMSON-BRANDT GMBH, 78048 Villingen-Schwenningen (DE)
(72) Erfinder: Platte, Hans-Joachim, 3005 Hemmingen 4 (DE); Schütze, Herbert, 3100 Celle (DE); Keesen, Heinz Werner, 3000 Hannover 1 (DE); Haupt, Dieter, 3257 Springe 6 (DE); Plantholt, Martin, 6277 Bad Camberg 2 (DE)

(56) Entgegenhaltungen:
- DE-A- 2 937 284
- FR-A- 2 061 515
- GB-A- 1 047 260
- GB-A- 1 580 437
- GB-A- 2 162 019
- US-A- 4 272 787

## Beschreibung

Fernsehkameras enthalten unter anderem ein Kameragehäuse, ein Objektiv und eine zur Erzeugung des Signals vorgesehene Speicherplatte, im folgenden Target genannt. Auf dem Target wird mittels der optik ein Bildfeld erzeugt, aus dem durch Abtastung mit einem Elektronenstahl oder sonstige Abstastung entsprechend einem Fernsehraster das Videosignal erzeugt wird.

Insbesondere bei kleinen tragbaren Kameras besteht in der Praxis die Gefahr, daß das Bild durch eine starke ungewollte Beschleunigung des Kameragehäuses beeinträchtigt, d.h. verwackelt wird. Das bedeutet, daß z.B. das gewünschte Bildfeld aus dem Bereich des Target teilweise herausgerät und Teile des gewünschten Bildes kurzzeitig verloren gehen.

Derartige Verwackelungen lassen sich weitestgehend ausschalten oder verhindern durch Anordnung des Kameragehäuses auf einem Stativ oder durch Hilfsmittel, mit denen die Kamera am Körper getragen wird. Derartige Mittel sind jedoch in der Praxis nicht immer anwendbar oder auch oft nicht ausreichend.

Der Erfindung liegt die Aufgabe zugrunde, bei einer Fernsehkamera die Auswirkungen von unerwünschten starken Beschleunigungen des Kameragehäuses auf das mit der Kamera erzeugte Videosignal zu verringern.

Diese Aufgabe wird gelöst mit einer Kamera mit einem Target und mit optischen Abbildungsmitteln, die auf das Target ein gewünschtes Bild projizieren, welches zur Erzeugung eines Videosignals entlang eines Rasters abgetastet wird, sowie mit einem Komparator oder einem Korrelator, der die Videosignale aufeinanderfolgender Bilder oder Bildausschnitte zueinander in Beziehung setzt und ein Ergebnissignal abgibt,
wobei eine Schwellenwertstufe (9) vorgesehen ist, die eine Stellgröße (U2) erzeugt, wenn das Ergebnissignal einen bestimmten Schwellenwert überschreitet,
wobei ein Bildspeicher (15) vorgesehen ist, der geeignet ist, um wenigstens zwei Bilder oder Halbbilder zu speichern und zur weiteren Verwertung an einem Ausgang (11) abzugeben und
wobei bei Auftreten der Stellgröße (U2) während der Abtastung des auf das Target projizierten Bildes das betreffende Bild oder Halbbild nicht an dem Ausgang (11) des Bildspeichers (15) abgegeben wird, sondern durch ein abgespeichertes zeitlich vorhergehendes Bild oder Halbbild ersetzt wird.

Bei der Erfindung wird also eine starke, ungewollte Beschleunigung des Kameragehäuses meßtechnisch erfaßt und in eine elektrische Stellgröße umgewandelt. Diese Ermittlung der starken Beschleunigung des Kameragehäuses ist dadurch möglich, daß die von der Kamera erzeugten Videosignale jeweils von zwei zeitlich aufeinanderfolgenden Bildern verglichen werden. Wenn die Differenz zwischen diesen Signalen oder eines Teiles derselben einen bestimmten Schwellwert überschreitet, so kann dies als Indiz dafür gewertet werden, daß eine unerwünschte Beschleunigung vorliegt.

In den Weg der Stellgröße ist ein Schwellwert eingeführt, um die ungewollten starken Beschleunigungen und Bewegungen des Kameragehäuses durch eine Verwacklung von den gewollten langsameren Beschleunigungen und Bewegungen bei einem Schwenkvorgang bei Verfolgung einer bestimmten Szene zu unterscheiden. Das von der Kamera gelieferte Signal eines Bildes wird zunächst in einen Speicher eingegeben und erst dann verwertet, wenn während der Abtastung des Bildfeldes auf dem Target keine Verwacklung registriert wurde. Sobald während der Abtastung des Bildfeldes eine Verwacklung registriert wird, wird das gesamte Bild nicht verwertet, sondern durch ein gespeichertes Bild aus dem vorangegangenen Zeitabschnitt ersetzt. Die dadurch bewirkte geringe Beeinflussung der Bewegungsphase ist weniger störend als eine Verwacklung des gesamten Bildes.

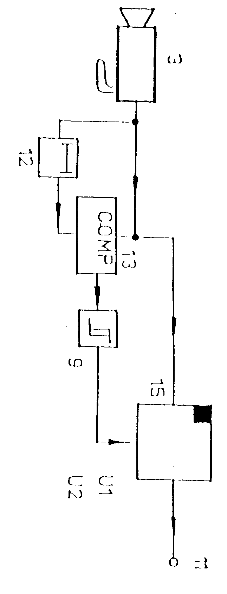

Die Figur zeigt das Prinzip einer erfindungsgemäßen elektronischen Schaltung, in der bekannte mechanische Beschleunigungssensoren ersetzt sind durch die Schaltung. Das Signal eines Bildes wird einmal direkt und einmal über eine Verzögerungsstufe 12 für die Dauer eines Bildes dem Komparator 13 zugeführt. Der Komparator 13 vergleicht die Signale von zwei oder mehr zeitlich aufeinanderfolgender Bilder oder von definierten Teilen oder Auszügen der Bilder. Bei Normalbetrieb einschließlich einer gewollten Schwenkbewegung übersteigt diese Differenz einen Schwellwert nicht. Bei einer ungewollten ruckartigen Bewegung, also einem Wackeln des Gehäuses 3, wird dieser Schwellwert überschritten. Auf diese Weise wird mit der Schwellwertschaltung 9 wieder die die Verwacklung anzeigende Stellgröße Us erzeugt.

Die von der Kamera 3 gelieferten Bilder werden zunächst dem Speicher 15 zugeführt, der etwa die Signale von zwei bis drei Bildern speichern kann. Bei der Abtastung eines Bildes wird das erzeugte Videosignal zunächst nicht auf die Ausgangsklemme 11 gegeben, sondern in dem Speicher 15 gespeichert. Wenn am Ende der Abtastung eines Bildes keine ungewollte Bewegung der Kamera 3, also keine Verwacklung registriert wurde, erscheint eine Spannung U1, die das Auslesen des gespeicherten Bildsignals dieses Bildes bewirkt, so daß dieses Signal an der Klemme 11 erscheint. Wenn während der Abtastung des Bildes, unabhängig vom Zeitpunkt innerhalb des Bildes, eine Verwacklung registriert wurde, erscheint eine Spannung U2. Die Spannung U2 bewirkt, daß das Signal dieses Bildes, das der Verwacklung unterliegt, nicht ausgewertet wird. Stattdessen wird das Signal eines zeitlich vorangehenden Bildes ohne Verwacklung, das vorher in dem Speicher 15 gespeichert ist, ausgelesen und der Klemme 11 zugeführt. Gestörte Bilder, in denen durch die Schaltung 13, 9 eine Verwacklung registriert wurde, werden also jeweils nicht verwertet und durch nicht gestörte Bilder aus einem davor liegenden Zeitraum ersetzt.

Der Vergleich der Signale aufeinanderfolgender Bilder in dem Komparator 13 kann sich auch auf bestimmte ausgewählte Bildbereiche erstrecken. Dabei ist auch ein Vergleich über mehrere aufeinanderfolgende Vollbilder möglich, eine sogenannte zweidimensionale Autokorrelation.

## Patentansprüche

1. Kamera mit einem Target und mit optischen Abbildungsmitteln, die auf das Target ein gewünschtes Bild projizieren, welches zur Erzeugung eines Videosignals entlang eines Rasters abgetastet wird, sowie mit einem Komparator oder einem Korrelator, der die Videosignale aufeinanderfolgender Bilder oder Bildausschnitte zueinander in Beziehung setzt und ein Ergebnissignal abgibt,
wobei eine Schwellenwertstufe (9) vorgesehen ist, die eine Stellgröße (U2) erzeugt, wenn das Ergebnissignal einen bestimmten Schwellenwert überschreitet,
wobei ein Bildspeicher (15) vorgesehen ist, der geeignet ist, um wenigstens zwei Bilder oder Halbbilder zu speichern und zur weiteren Verwertung an einem Ausgang (11) abzugeben und
wobei bei Auftreten der Stellgröße (U2) während der Abtastung des auf das Target projizierten Bildes das betreffende Bild oder Halbbild nicht an dem Ausgang (11) des Bildspeichers (15) abgegeben wird, sondern durch ein abgespeichertes zeitlich vorhergehendes Bild oder Halbbild ersetzt wird.

## Claims

1. Camera including a target and optical projection means projecting a desired picture onto said target said picture being scanned along a raster for producing a video signal and further including a comparator or a correlator relating the video signals of successive pictures or parts thereof with respect to each other and providing a result signal,
wherein a threshold value stage (9) is provided generating a control value (U2) if the result signal exceeds a given threshold value,
wherein a picture memory (15) is provided being capable of storing at least two frames or fields and delivering said frames or fields to an output (11) for further use and
wherein on occurrence of said control value (U2) during the scanning of the picture projected onto said target the corresponding frame or field is not delivered to the output (11) of the picture memory (15) and instead is replaced by a stored chronologically preceding frame or field.

## Revendications

1. Caméra ayant une cible et des moyens d'imagerie optiques qui projettent sur la cible une image souhaitée, qui est analysée le long d'une trame pour la génération d'un signal vidéo, ainsi qu'un comparateur ou un corrélateur qui met en relation les uns par rapport aux autres les signaux vidéo d'images ou de coupes séquentielles et qui délivre un signal de résultat ;
où un étage de seuil (9) est prévu, qui produit une variable réglante (U2), lorsque le signal de résultat dépasse une certain seuil,
où une mémoire image (15) est prévue qui est appropriée pour stocker au moins deux images ou trames et les délivrer pour la suite de l'exploitation à une sortie (11),
où en présence de la variable réglante (U2), pendant le balayage de l'image projetée sur la cible, l'image ou trame concemée n'est pas délivrée à la sortie (11) de la mémoire image (15), mais remplacée par une image ou trame d'un instant antérieur stockée.
